# EUROPEAN PATENT APPLICATION

(11) **EP 0 967 113 A2**
(43) Date of publication of application: **29.12.1999**
(21) Application number: 99850112.6
(22) Date of filing: 24.06.1999
(51) Int. Cl.: B60N 2/28

(54) **A child's car seat**

(30) Priority: 26.06.1998 SE 9802281
(71) Applicant: HTS Hans Torgersen & Sonn A/S, 1360 Nesbru (NO)
(72) Inventor: Thorup, Espen, 1335 Snaroya (NO); Dagestad, Sjur, 1340 Bekkestua (NO)
(74) Representative: Rostovanyi, Peter

(57) **Abstract**

A child's car seat (1) for backward mounting on a car seat (2) with a backrest (3) comprising a main part (4) with a backrest portion (5) and a seat portion (6), and a support frame (7) with a central portion (8), support legs (9) for placing against the car's floor (11) in front of the car seat (2) and a support strap (10) for placing against the car seat's back rest (3). The backrest portion (5) and the seat portion (6) are integral with a base portion (12), the support frame's central portion (8) is integral with the base portion (12) and the seat portion (6), and the support frame's central portion (8) is formed by external tubes which are included in a telescopic connection (13) between the support frame's central portion (8) and the support legs (9).

## Description

The invention relates to a child's car seat for backward mounting on a car seat with a backrest where the child's car seat comprises a main part comprising a backrest portion and a seat portion, and a support frame with a central portion, support legs for placing against the car's floor in front of the car seat, and a support strap for mounting against the car seat's backrest.

A child's car seat can be constructed in such a way as to be kept in place by the car's ordinary safety belts, either by a three-point belt in the front seat beside the driver, by a three-point belt on one side in the back seat, or by a two-point belt in the middle of the back seat. In this way it is easy to place the child's car seat in the car and take it out. A general problem with such a fastening of a child's car seat is that the child's car seat becomes unhinged during a collision.

A child's car seat can also be constructed in such a way as to be kept in place by its own fastening means, which are again fastened to the car, for example through the car's safety belts' grips. These fastening means can be constructed as clasps, so that the child's safety seat can be taken out of the car. However, compared to the above mentioned solution, this is usually both a more expensive and cumbersome solution, and as far as the existing designs are concerned, such a fastening of the child's car seat does not solve the problem of the child's car seat coming out of place during a collision.

In order to solve this problem it has been suggested that a child's car seat be supplied with support legs reaching down to the car's floor.

WO 89/01422 describes a child's car seat in a forward facing position, especially for placing in the middle of the back seat of a car. The child's car seat comprises a tubular frame with an external backrest portion and a lower portion which constitutes a support leg for mounting against the car's floor. The lowest part of the support leg is adjustable lengthwise for adaptation to the distance between the car's back seat and the floor. A loose cushion is used together with the frame in order to give the child a good sitting position.

EP 164 909 describes a child's car seat for use on the back seat of a car. The child's car seat comprises a curved tubular frame which extends from the car's floor to the back seat's backrest, and a seat portion which can be fastened to the frame in a forward facing or a backward facing position. Also on this frame, the lower portion, which comprises two support legs is adjustable lengthwise to adapt to the distance between the car's back seat and the floor.

With the above mentioned child's car seats a better securing in the car is achieved, and the child's car seat is consequently less likely to become unhinged during a collision than the child's car seats mentioned in the introduction. On the child's car seat described in WO 89/014522 and EP 164 909 however, the frames protrude far out from the child's car seat itself and are therefore cumbersome, especially when taking in and out of the car. Another disadvantage with these known child's car seats is that the support legs have portions with a considerably smaller radius of curvature than the rest of the support leg. The geometrical form of these portions results in higher stress upon strain than the rest of the support leg, and they are consequently dimensioning for the support leg. Since the support leg consitutes a tube with constant cross sections, this means that the portion of the support leg located outside this portion with the smaller radius of curvature receives a low utilization of capacity and consequently an unnecessary high weight.

The purpose of the invention is to produce a child's car seat of the type which comprises a frame with support legs for mounting against the car's floor, which child's car seat will be easier to handle. Another purpose is that the child's car seat will have a construction which brings about a secure transfer of the forces which may occur between the car and the child's car seat during a collision. A further purpose is that the support legs will have a design which, compared with the design of the support legs of the above mentioned child's car seat allows a dimensioning which gives a lower weight.

These purposes are achieved, according to the invention with a child's car seat described in the introduction, distinguished by the characteristics mentioned in the claims.

The invention will be further explained in connection with a description of a specific embodiment, with reference to the drawing, where:
Fig. 1 is a perspective view of a child's car seat according to the invention, mounted on a car seat.
Fig. 2 is a perspective view of a support frame which form parts of the child's car seat according to the invention.
Fig. 3 is an exploded perspective view of the support frame in fig. 2.
Fig. 4 is a perspective view of the child's safety seat with pushed-in support legs.

The same reference numbers are used for corresponding parts in all the figures.

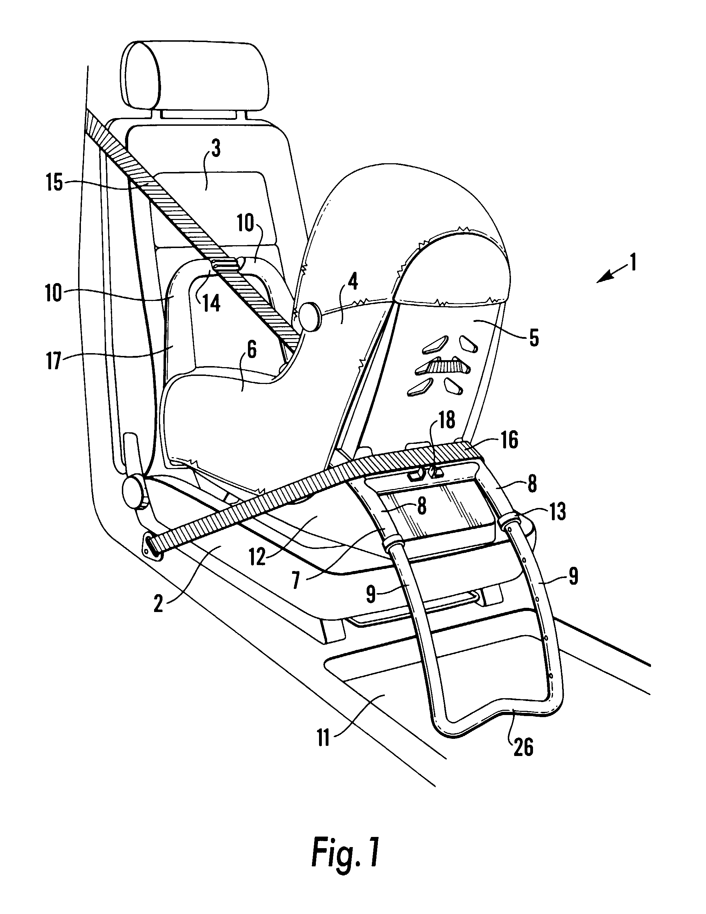

Fig. 1 shows a child's car seat 1 placed facing backward on a car seat 2, i.e. placed with its back in the car's driving direction. The child's car seat 1 consists of a main part 4 which comprises a seat portion 6, for seating a child, and a backrest portion 5 for the support of the child's back. The seat portion 6 and the backrest portion 5 have a hollow shape on the side facing the car seat's backrest 3, so that the child may sit firmly. The shape of the child's car seat's seat portion 6 and backrest portion 5 in connection to the placing of the child does not concern the invention, and will not be described further. A base portion 12 which is a continuation of the backrest portion 5 and seat portion 6 forms a foundation for mounting the child's car seat on the car seat 2.

The child's car seat 1 comprises also a support frame 7 which comprises a central part 8, support legs 9 and a support strap 10. The support legs 9 constitute two tubes extending from the central portion 8 for mounting against the car's floor 11, in front of the car seat 2, and which are connected by a foot 26. The support frame's central portion 8 is integral with the base portion 12 and seat part 6, and fig. 1 shows how the central portion 8 is partly arranged within the base portion 12 and seat portion 6, and partly lies close up to the base portion 12. The support frame's central portion 8 thereby forms a firm connection between the child's car seat's main part 4 and the support legs 9 and the support strap 10.

The support strap 10 forms an extension of the seat portion 6 and abuts the car seat's backrest 3. To protect the child against shock the support strap 10 is provided with upholstry 17.

The child's safety seat is secured to the car seat 2 by a standard three-point safety belt which comprises a diagonal belt 15, which is placed over the support strap 10 and abuts the support strap in a mounting portion 14, and a hip belt 16 which is placed partly around the child's car seat and abuts this in a transitional area between the child's car seat's backrest portion 5 and the base portion 12.

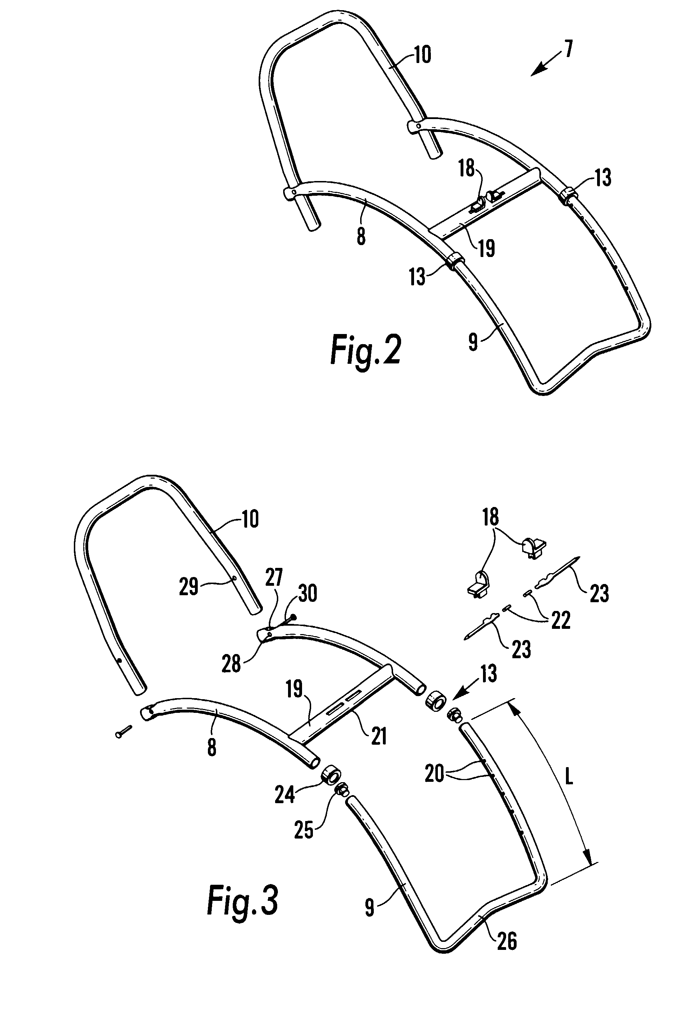

Fig. 2 is a perspective view of the support frame 7, and it is here illustraded how the central portion 8, the support legs 9, and the support strap 10 together form a uniform construction. The support frame's central portion 8 is formed by external tubes which forms parts of a telescopic connection 13 between the support frame's central portion 8 and the support legs 9. It is thereby possible to push the support legs 9 into the central portion 8, so that the length of the support legs 9 can be adapted to the distance between the car's back seat and the floor. Further, this telescopic connection causes the child's car seat to occupy smaller space when the support legs are pushed into the central portion than when they are drawn out, so that the child's car seat is easier to handle.

Fig. 3 shows the support frame on fig. 2 in an exploded view. It is here illustrated how the telescopic connection 13 has resulted from the fact that the support legs 9 are led into the external tubes which form the central portion 8 through an outer slide 24 and an inner slide 25. It is further shown how the central portion 8 is furnished with a tie bar 19 with a locking case 21, which contains a locking device for the locking of the support legs 9 into various positions. The locking device is formed by two latch pins 23, which with the help of springs 22 are pressed into positioning holes 20 in the support legs 9, and which with the help of a locking button 18 can be pulled back so that the support legs 9 can be shifted in relation to the support frame's central portion 8.

In order to reduce the necessary space requirements of the child's car seat when it is not in use, the support strap 10, may be detachable. Referring to fig. 3 one can see how this can be achieved by introducing the support strap into openings 27 in the support frame's central portion, and that corresponding holes 28, 29 in the central portion 8, respectively the support strap 10 are connected with a releasable split pin 30.

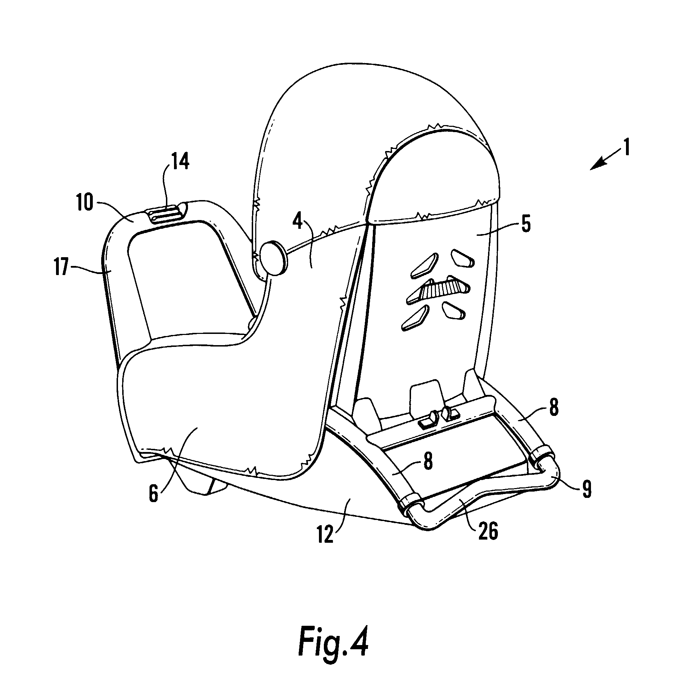

Fig. 4 is a perspective view of the child's car seat with pushed-in support legs, and shows a preferred embodiment where the support frame's central portion 8 is arranged so that it can contain the support legs 9 in their full length L, see fig. 3. It is further shown how the support frame's central portion 8 is mainly arranged within the main part's 4 enveloping surface, i.e. a supposed surface which follows the main part's 4 contour and forms the practical restriction for storing and handling the child's car seat. There is thereby a minimum protrusion of the support legs 9 outside the main part 4, so that the child's car seat, when the support legs 9 are pushed into the central portion 8, takes up no bigger space than a child's car seat without support legs. The only portion of the support legs 9 protruding is the foot 26, which can be used as a handle when moving the child's safety seat, which makes it easier to handle.

When securing the child's safety seat 1 onto the car seat 2 forces are led from the diagonal belt 15 and the hip belt 16 into the child's safety seat's main part 4, which comprises the backrest portion 5, and the seat portion 6, and the base portion 12, and further into the car seat 2 and its backrest 3. In addition, a certain amount of forces are led from the diagonal belt 15 and the hip belt 16, into the support frame 7 and into the car seat's backrest 2 and the car's floor 11 respectively through the support strap 10 and the support legs 9. A better securing of the child's safety seat is achieved with the help of the support frame 7 than without the support frame.

Due to the rapid decelarion during a sudden stop or collision the child's car seat with the child is exposed to great forces with directions depending on the course of the collision. The directions of the forces are thus partly unpredictable, and in order to be prepared in the best possible way against these collision forces the child's car seat should be secured to the car in the best possible way. During a collision, a substantial part of the forces between the car and the child's safety seat are transferred through the support frame, and consequently the support frame is primarily important during a collision.

Due to the constructive design where the support frame's central portion 8 is integral with the base portion 12 and the seat portion 6, a very steady connection is achieved between the child's car seat's main part 4 and the support frame 7, thereby achieving a secure transfer of the forces which can occur between the car and the child's safety seat during a collision.

The child's car seat's main part 4 is appropriately moulded in a plastic material, and in order to achieve a steady connection between the child's car seat's main part and the support frame, the support frame's central portion 8 is preferentially moulded into the child's safety seat's main part.

It appears from the figures that the support frame's support legs 9 have an even curvature in their full length L. The support legs thereby have a geometrically advantageous form, without portions which, due to their design, on being strained receive a higher stress than the rest of the support leg, which would therefore be dimensioning. Compared with the support legs of the child's car seat mentioned in the introduction, the support legs of which have portions with a substantially smaller radius of curvature than the rest of the support leg, the support legs of the child's car seat according to the invention have a constructive design which allows a more slender dimensioning, and consequently a lower weight.

Further it appears from the figures that the support frame's central portion 8 has an even curvature which corresponds to the curvature of the support legs 9, so that the support legs can be pushed into the support frame's central portion without being obstructed by changes in the form of the external tubes which consitute the support frame's central portion.

The invention has been explained above with reference to a specific embodiment. It is, however, obvious that variants within the field of the invention are possible, for example in connection with the external cross section form of the support legs and the internal cross section form of the tubes which are included in the support frame's central portion, in as-much-as any cross section form which can be used in a telescopic connection, could be utilized.

## Claims

1. A child's car seat (1) for backward mounting on a car seat (2) with a backrest (3), where the child's car seat (1) comprises a main part (4) comprising a backrest portion (5) and a seat portion (6), and a support frame (7) with a central portion (8), support legs (9) for placing against the car's floor (11) in front of the car seat (2) and a support strap (10) for placing against the car seat's backrest (3),
characterized in that the backrest portion (5), and the seat portion (6) are integral with a base portion (12), and that the support frame's central portion (8) is integral with the base portion (12) and the seat portion (6), and that the support frame's central portion (8) is formed by external tubes which are included in a telescopic connection (13) between the support frame's central portion (8) and support legs (9).

2. A child's car seat according to claim 1,
characterized in that the support frame's central portion (8) is arranged to contain the support legs (9) in their full length (L).

3. A child's car seat according to one of the preceding claims,
characterized in that the support frame's central portion (8) is mainly arranged within the main part's (4) enveloping surface, so that the support legs (9), when they are located inside the support frame's central portion (8) do not, or to a minimum extent protrude outside the main part (4).

4. A child's car seat according to one of the preceding claims,
characterized in that the support frame's support legs (9) have an even curvature in their full length (L).

5. A child's car seat according to one of the preceding claims,
characterized in that the support frame's central portion (8) has an even curvature corresponding to the curvature of the support legs (9).

6. A child's car seat according to one of the preceding claims,
characterized in that the support frame's central portion (8) is moulded into the child's car seat's main part (4).

7. A child's car seat according to one of the preceding claims,
characterized in that the support strap (10) is detachable.

8. A child's car seat according to one of the preceding claims,
characterized in that the support strap (10) comprises a mounting portion (14) for a diagonal belt (15) which is included in a safety car belt (15, 16).

9. A child's car seat according to one of the preceding claims,
characterized in that the support frame's central portion (8) comprises a locking device (18, 20, 21, 22, 23) for securing the support legs (9) in various positions.
